# EUROPÄISCHE PATENTSCHRIFT

(11) **EP 2 505 396 B1**
(45) Veröffentlichungstag und Bekanntmachung des Hinweises auf die Patenterteilung: **17.12.2014**
(21) Anmeldenummer: 11290160.8
(22) Anmeldetag: 31.03.2011
(51) Int. Cl.: B60H 1/22

(54) **Kraftfahrzeugklimaanlage**
Motor vehicle air conditioning
Climatisation de véhicule automobile

(43) Veröffentlichungstag der Anmeldung: 03.10.2012
(73) Patentinhaber: Behr France Rouffach SAS, 68250 Rouffach (FR)
(72) Erfinder: Gautsch, Laurent, 67600 Mussig (FR); Miss, Pascal, 67600 Sélestat (FR)
(74) Vertreter: Grauel, Andreas

(56) Entgegenhaltungen:
- EP-A1- 1 643 805
- EP-A1- 2 147 811
- EP-A2- 1 439 738
- WO-A1-2007/071335

## Beschreibung

Die Erfindung betrifft eine Kraftfahrzeugklimaanlage gemäß dem Oberbegriff des Anspruches 1. Siehe EP 1 643 805 A1.

Kraftfahrzeugklimaanlagen dienen dazu, die dem Innenraum eines Kraftfahrzeuges zuzuführende Luft zu erwärmen und/oder zu kühlen. In Kraftfahrzeugklimaanlagen werden Wärmeübertrager als elektrische Heizeinrichtungen eingesetzt, um die Luft zu erwärmen, welche dem Innenraum zugeführt wird. Die elektrische Heizeinrichtung umfasst PTC-Elemente. PTC-Elemente (PTC: Positive Temperature Coefficient) sind Strom leitende Materialien, die einen elektrischen Widerstand aufweisen und bei tieferen Temperaturen den Strom besser leiten können als bei höheren Temperaturen. Ihr elektrischer Widerstand vergrößert sich somit bei steigender Temperatur. Das PTC-Element besteht im Allgemeinen aus Keramik und ist ein Kaltleiter. Dadurch stellt sich unabhängig von den Randbedingungen - wie z. B. angelegte Spannung, Nominalwiderstand oder Luftmenge an dem PTC-Element - eine sehr gleichmäßige Oberflächentemperatur am PTC-Element ein. Eine Überhitzung kann verhindert werden wie sie z. B. mit einem normalen Wärme abgebenden Heizdraht auftreten könnte, da hier unabhängig von den Randbedingungen immer ungefähr der gleiche Widerstand und dadurch eine im Wesentlichen identische elektrische Heizleistung aufgebracht wird. Der Wärmeübertrager umfasst PTC-Elemente, wenigstens zwei elektrische Leiter mittels denen elektrischer Strom durch das PTC-Element geleitet wird und Wärmeleitelemente, insbesondere Lamellen bzw. Wellrippen, mittels denen die Oberfläche zum Erwärmen der Luft vergrößert wird.

Die PTC-Elemente, die Leiterplatten als Leiter sowie die Wellrippen bilden dabei ein Heizregister. Zur Befestigung des Heizregisters an einem Klimaanlagengehäuse aus Kunststoff der Kraftfahrzeugklimaanlage, ist an dem Heizregister ein Rahmen angeordnet. Der Rahmen umfasst dabei ein Anschlussteil und ein Befestigungsteil. Am Anschlussteil ist eine Kastenwandung mit einer Öffnung angeordnet und durch diese Öffnung können elektrische Leitungen mit Kontaktplatten geführt werden, um durch die Leiter bzw. Leiterplatten elektrischen Strom zu leiten. Als elektrische Spannung wird dabei beispielsweise eine Spannung von 12 Volt eingesetzt als Potenzialdifferenz zwischen zwei Leiterplatten. Der Rahmen mit dem Anschlussteil und dem Befestigungsteil ist zweiteilig aus separat hergestellten Bauteilen, nämlich dem Anschlussteil und dem Befestigungsteil, ausgebildet. Das Befestigungsteil ist dabei U-förmig und umgreift das Heizregister. Bei der Herstellung der Kraftfahrzeugklimaanlage ist die Herstellung eines zweiteiligen Rahmens für den Wärmeübertrager in der Herstellung kostenintensiv, weil das Anschlussteil und das Befestigungsteil mittels Spritzgießen aus Kunststoff hergestellt wird und aus diesem Grund zwei unterschiedliche Werkzeuge, jeweils für das Anschlussteil und das Befestigungsteil, vorgehalten werden müssen und die beiden Bauteile auch getrennt mit den beiden Werkzeugen hergestellt werden müssen. Darüber hinaus ist es auch bekannt, den Rahmen für den Wärmeübertrager auch einteilig mittels Spritzgießen aus Kunststoff herzustellen. Ein Spritzgießen mit Kunststoff eines einteiligen Rahmens für den Wärmeübertrager ist jedoch in der Herstellung schwierig und damit auch teuer und mit zahlreichen Problemen behaftet.

Die Aufgabe der vorliegenden Erfindung besteht deshalb darin, eine Kraftfahrzeugklimaanlage mit einem Wärmeübertrager zur Verfügung zu stellen, die in der Herstellung preiswert ist und eine zuverlässige Befestigung des Wärmeübertragers an einem Klimaanlagengehäuse ermöglicht.

Diese Aufgabe wird gelöst mit einer Kraftfahrzeugklimaanlage umfassend ein Klimaanlagengehäuse und einen Wärmeübertrager, der Wärmeübertrager, umfassend wenigstens ein elektrisches Widerstandsheizelement, insbesondere wenigstens ein PTC-Element, wenigstens zwei mit dem wenigstens einen elektrischen Widerstandsheizelement elektrisch leitend verbundene Leiter, insbesondere Leiterplatten, um elektrischen Strom durch das wenigstens eine elektrische Widerstandsheizelement zu leiten und dadurch das elektrische Widerstandsheizelement zu erwärmen, vorzugsweise wenigstens ein elektrisches Isolierelement, welches die wenigstens zwei Leiter elektrisch isoliert, wobei das wenigstens eine elektrische Widerstandsheizelement und die wenigstens zwei Leiter zu einem Heizregister verbunden sind, einen Rahmen für das Heizregister, wobei der Rahmen für das Heizregister wenigstens teilweise von dem Klimaanlagengehäuse gebildet ist.

Das Kraftfahrzeugklimaanlagengehäuse besteht, wie der Rahmen für den Wärmeübertrager, aus Kunststoff und ist mit Spritzgießen hergestellt. Beim Spritzgießen können somit unterschiedliche Geometrien der Kraftfahrzeugklimaanlage mit einem geringen technischen Aufwand zur Verfügung hergestellt werden bei der Herstellung. Das Klimaanlagengehäuse braucht somit nur über eine entsprechende Geometrie zur Bildung eines Rahmens für das Heizregister aufzuweisen. Das Heizregister des Wärmeübertragers liegt damit unmittelbar auf dem Klimaanlagengehäuse auf. Dadurch kann bei der Herstellung des Rahmens für den Wärmeübertrager entweder auf einen separaten Rahmen komplett verzichtet werden, weil der Rahmen für den Wärmeübertrager vollständig von dem Klimaanlagengehäuse gebildet ist, oder nur ein Teil des Rahmens wird als separates Bauteil mittels Spritzen hergestellt und ein anderer Teil des Rahmens für den Wärmeübertrager bzw. für die Aufnahme des Heizregisters wird von dem Klimaanlagengehäuse gebildet.

Der Rahmen umfasst ein Anschlussteil und ein Befestigungsteil.

Das Befestigungsteil weist zwei Seitenstreben und eine Bodenstrebe auf und die beiden Seitenstreben sind mit einer Führungseinrichtung, die als einem Führungsschlitz ausgebildet ist, zur formschlüssigen Befestigung und Führung des Heizregisters versehen. Am Ende der beiden Seitenstreben ist vorzugsweise das Anschlussteil befestigt.

In einer ergänzenden Variante ist das Befestigungsteil von dem Klimaanlagengehäuse gebildet. Das Befestigungsteil als Rahmen zur Aufnahme des Heizregisters ist somit von dem Klimaanlagengehäuse gebildet und muss nicht separat hergestellt werden, sondern das Befestigungsteil kann als einteilige Komponente des Klimaanlagengehäuses beim Spritzgießen des Klimaanlagengehäuses einfach und preiswert mit hergestellt werden. Lediglich das leichte, kleine und einfach mittels Spritzgießen herzustellende Anschlussteil ist nicht einteiliger Bestandteil des Klimaanlagengehäuses und kann einfach und preiswert mittels Spritzgießen aus Kunststoff hergestellt werden.

In einer weiteren Ausführungsform ist das Befestigungsteil einteilig an dem Klimaanlagengehäuse ausgebildet.

In einer zusätzlichen Ausführungsform ist das Befestigungsteil im Wesentlichen U-förmig.

In einer ergänzenden Ausgestaltung ist an der Bodenstrebe wenigstens eine Trennscheibe ausgebildet, welche zwischen zwei Leitern angeordnet ist zur Verhinderung eines mechanischen und elektrischen Kontaktes zwischen den beiden Leitern. Beim Einschieben des Heizregisters in den Raum zwischen den beiden Seitenstreben kommt am Ende des Einschiebvorganges jeweils eine Trennscheibe zwischen die zwei Leiter, wobei zwischen den beiden Leitern die elektrischen Widerstandselemente angeordnet sind. Dadurch verhindert die wenigstens eine Trennscheibe nach dem vollständigen Einschieben des Heizregisters in das Befestigungsteil einen Kurzschluss zwischen zwei Leitern mit wenigstens einem dazwischen angeordneten elektrischen Widerstandsheizelement.

In einer ergänzenden Variante das ist Anschlussteil ein gesondertes, von dem Kraftfahrzeugklimaanlagengehäuse unabhängiges Bauteil. Das Anschlussteil ist somit ein separat von dem Klimaanlagengehäuse hergestelltes Bauteil, steht jedoch im Allgemeinen nach dem Einbau des Wärmeübertragers in das Klimaanlagengehäuse in mechanischen Kontakt mit dem Klimaanlagengehäuse und besteht vorzugsweise aus Kunststoff und ist vorzugsweise mittels Spritzgießen hergestellt.

In einer weiteren Ausführungsform weist das Anschlussteil eine Fixierungseinrichtung zur Fixierung des Heizregisters an dem Anschlussteil auf.

In einer zusätzlichen Ausgestaltung ist mit der Fixierungseinrichtung das Heizregister form- und/oder kraftschlüssig an dem Anschlussteil fixiert.

In einer zusätzlichen Ausgestaltung weist das Anschlussteil als Fixierungseinrichtung zwei Rastarme mit je einer Rastnase auf und jeweils eine Rastnase greift in einer Aussparung an je einem Leiter ein.

In einer ergänzenden Variante weist das Anschlussteil eine, vorzugsweise im Querschnitt rechteckförmige, Öffnung auf und innerhalb der Öffnung ist das Heizregister angeordnet. Durch die Öffnung an dem Anschlussteil wird bei der Herstellung des Wärmeübertragers das Heizregister wenigstens teilweise durch- oder eingeführt und Kontaktplatten an den Leitern werden ebenfalls durch die Öffnung durchgeführt. Dadurch können durch die Öffnung elektrische Leitungen mit den Kontaktplatten kontaktiert werden, um dadurch elektrischen Strom durch die Leiter zu leiten. Die elektrischen Kontaktplatten stellen dabei Fortsetzungen der Leiter dar oder stehen in elektrischer Verbindung mit den Leitern.

Zweckmäßig ist das Heizregister mit Kontaktplatten zum Leiten von elektrischem Strom durch die wenigstens zwei Leiter und das wenigstens eine elektrische Widerstandsheizelement versehen und die Kontaktplatten sind an oder im Bereich der Öffnung angeordnet.

In einer ergänzenden Ausführungsform ist mit wenigstens einem Fixierungsmittel, z. B. einer Schraub- oder eine Clipsverbindung, das Anschlussteil an dem Kraftfahrzeugklimaanlagengehäuse fixiert.

In einer zusätzlichen Ausgestaltung umfasst die Kraftfahrzeugklimaanlage ein Gebläse und/oder einen Kältemittelverdampfer und/oder wenigstens eine Luftleiteinrichtung, z. B. eine Luftklappe, und/oder einen Filter.

Zweckmäßig sind zwischen je zwei Leitern Wellrippen angeordnet. Die Wellrippen als Wärmeleitelemente erhöhen die Oberfläche des Heizregisters zur Erwärmung der durch die Kraftfahrzeugklimaanlage geleiteten Luft.

In einer ergänzenden Variante ist das wenigstens eine elektrische Widerstandsheizelement mit den wenigstens zwei Leitern stoffschlüssig, insbesondere mit Kleben, verbunden.

In einer weiteren Variante umfasst der Wärmeübertrager wenigstens ein Wärmeleitelement, z. B. eine Metallplatte und/oder Wellrippen, zur Übertragung von Wärme von dem wenigstens einen elektrischen Widerstandsheizelement auf ein zu erwärmendes Fluid.

Zweckmäßig besteht das wenigstens eine Wärmeleitelement, insbesondere die Wellrippen, wenigstens teilweise, insbesondere vollständig, aus Metall, beispielsweise Aluminium oder Stahl, oder Kunststoff.

Insbesondere bestehen die Leiter und/oder die Kontaktplatten wenigstens teilweise, insbesondere vollständig, aus Metall, z. B. Aluminium oder Kupfer.

In einer weiteren Ausgestaltung sind die Wellrippen und mittels Kleben und/oder Löten und/oder kraftschlüssig unter Vorspannung miteinander verbunden.

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage,
- Fig. 2: eine perspektivische Ansicht eines aus dem Stand der Technik bekannten Wärmeübertragers,
- Fig. 3: eine perspektivische Ansicht eines Wärmeübertragers für eine erfindungsgemäße Kraftfahrzeugklimaanlage,
- Fig. 4: eine perspektivische Ansicht eines Klimaanlagengehäuses mit einem an diesem ausgebildeten Befestigungsteil für die erfindungsgemäße Kraftfahrzeugklimaanlage und
- Fig. 5: eine perspektivische Ansicht eines Heizregisters und eines Anschlussteiles für die erfindungsgemäße Kraftfahrzeugklimaanlage.

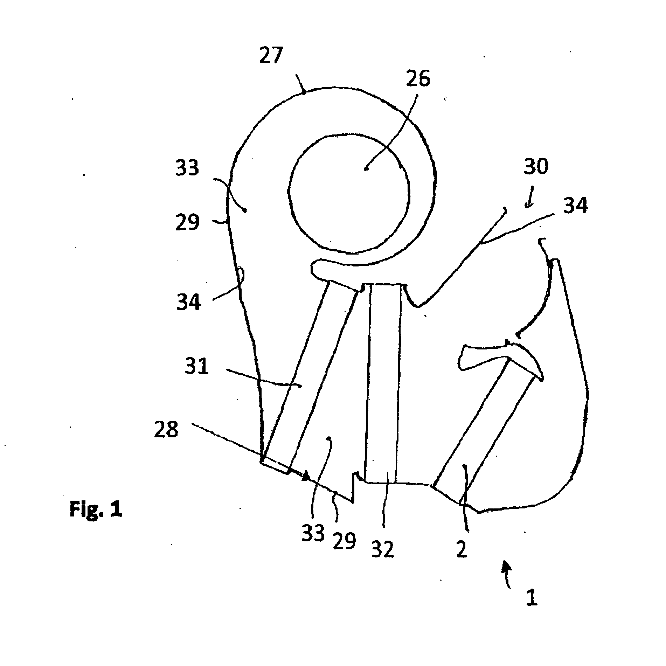

Fig. 1 zeigt eine Kraftfahrzeugklimaanlage 1. In einem Klimaanlagengehäuse 27 mit einer Bodenwandung 28 und einem Austrittsabschnitt 30 ist ein Gebläse 26, ein Luftfilter 31, ein Kältemittelverdampfer 32 und ein Wärmeübertrager 2 als eine elektrische Heizeinrichtung angeordnet. Das Klimaanlagengehäuse 27 bildet somit einen Kanal 33 zum Durchleiten der Luft. Gehäusewandungen 29 des Klimaanlagengehäuses 27 weisen an der Innenseite eine Oberfläche 34 auf, welche den Kanal 33 begrenzen. Die Luft für den Innenraum eines Kraftfahrzeuges wird mittels des Gebläses 26 durch den Luftfilter 31, den Kältemittelverdampfer 32 sowie den Wärmeübertrager 2 geleitet.

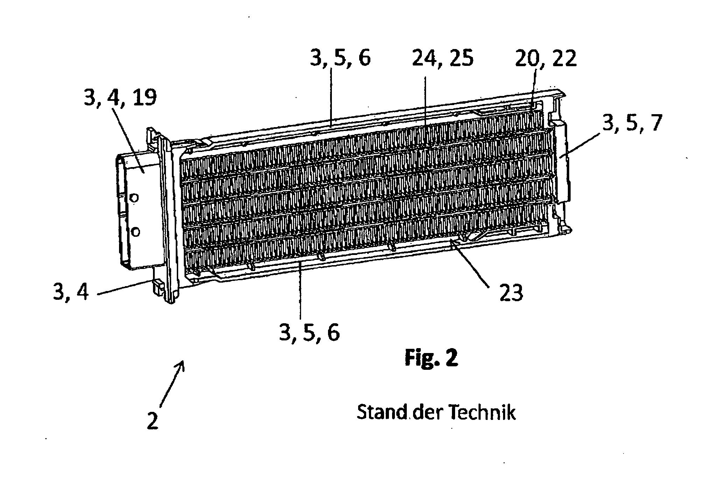

In Fig. 2 ist ein aus dem Stand der Technik bekannter Wärmeübertrager 2 als elektrische Heizeinrichtung dargestellt. Zwischen zwei länglichen, als Leiterplatten 22 ausgebildeten Leitern 20 sind mehrere als PTC-Elemente ausgebildete elektrische Widerstandsheizelemente (nicht dargestellt) angeordnet. Eine Vielzahl von derartigen Paaren an Leiterplatten 22 mit dazwischen angeordneten PTC-Elementen sind übereinander angeordnet und zwischen diesen Paaren an Leiterplatten 22 sind Wellrippen 25 als Wärmeleitelemente 24 angeordnet. Die Wellrippen 25, die Leiterplatten 22 und die PTC-Elemente bilden dabei ein Heizregister 23. Die Komponenten dieses Heizregisters 23 sind stoffschlüssig, zum Beispiel mittels Klebstoff oder einer Lötverbindung, miteinander verbunden. Zur Befestigung des Heizregisters 23 an dem Klimaanlagengehäuse 27 aus Kunststoff der Kraftfahrzeugklimaanlage 1 ist das Heizregister 23 von einem Rahmen 3 aus Kunststoff umgeben bzw. an dem Rahmen 3 als Bestandteil des Wärmeübertragers 2 ist das Heizregister 23 befestigt. Der Rahmen 3 ist zweiteilig und besteht aus einem Anschlussteil 4 und einem U-förmigen Befestigungsteil 5. Das Anschlussteil 4 weist eine Öffnung auf und an dieser Öffnung sind im Querschnitt im Wesentlichen rechteckförmige Kastenwandungen 19 ausgebildet. Das U-förmige Befestigungsteil 4 besteht aus zwei Seitenstreben 6 und einer Bodenstrebe 7. Die beiden Seitenstreben 6 sind dabei im Wesentlichen parallel zueinander ausgerichtet und die Bodenstrebe 7 verbindet die beiden Seitenstreben 6 und ist im Wesentlichen senkrecht zu der Seitenstrebe 6 ausgerichtet. Am in Fig. 2 links dargestellten Endbereich der beiden Seitenstreben 6 ist formschlüssig mit den beiden Seitenstreben 6 das Anschlussteil 4 befestigt. Damit muss in aufwendiger Weise bei der Herstellung des Rahmens 3 separat sowohl das Anschlussteil 4 als auch das Befestigungsteil 5 mittels Spritzgießen durch zwei unterschiedliche Werkzeuge in aufwendiger und damit auch in teurer Weise hergestellt werden.

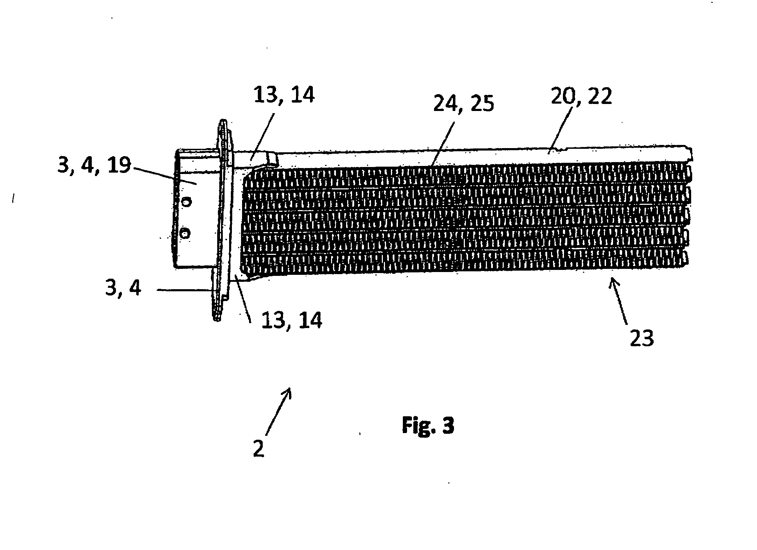

In den Fig. 3 bis 5 ist ein Wärmeübertrager 2 für eine erfindungsgemäße Kraftfahrzeugklimaanlage 1 dargestellt. Bei dem Wärmeübertrager 2 entspricht das Heizregister 23 dem bereits in Fig. 2 beschriebenen Heizregister 23. Der Rahmen 3 des Wärmeübertragers 2 besteht ebenfalls aus dem Anschlussteil 4 und dem Befestigungsteil 5. Das U-förmige Befestigungsteil 5 ist jedoch nicht als separates, mit Spritzgießen hergestelltes Teil ausgebildet, sondern bildet einen Teil des Klimaanlagengehäuses 27 und das Befestigungsteil 5 ist einteilig mit dem Klimaanlagengehäuse 27 ausgebildet. Dadurch kann beim Herstellen des Klimaanlagengehäuses 27 mit Spritzgießen bereits beim Spritzgießen des Klimaanlagengehäuses 27 auf einfache und kostengünstige Weise das Befestigungsteil 5 mit hergestellt werden.

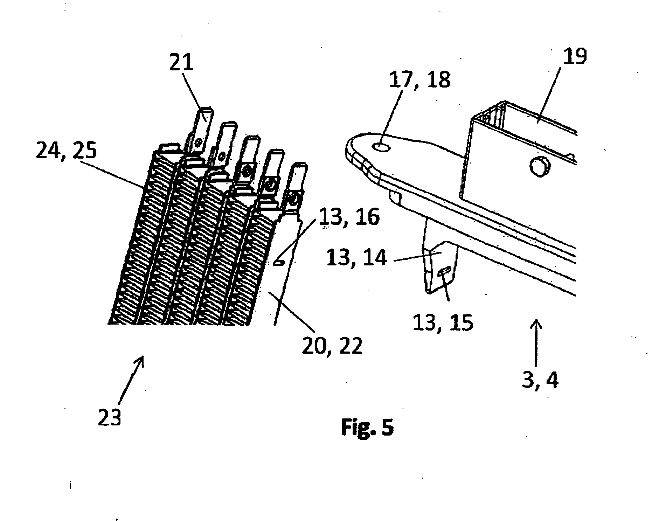

Das Anschlussteil 4 weist zwei Rastarme 14 als Fixierungseinrichtung 13 (Fig. 3 und 5) auf. An den beiden Rastarmen 14 ist jeweils eine Rastnase 15 vorhanden. Die beiden äußersten Leiterplatten 22 des Heizregisters 23 sind mit einer Aussparung 16 versehen. Zur Fixierung des Heizregisters 23 an dem Anschlussteil 4 ist das Heizregister 23 mit dem Ende im Bereich von elektrischen Kontaktplatten 21 in eine nicht dargestellte Öffnung des Anschlussteils 4 einzuschieben, sodass dadurch die Rastnasen 15 in Eingriff mit den Aussparungen 16 gelangen und dadurch eine formschlüssige Verbindung zwischen dem Anschlussteil 4 aus Kunststoff und dem Heizregister 23 hergestellt werden kann. Das Anschlussteil 4 weist an der Öffnung, welche nicht dargestellt ist, die im Wesentlichen im Querschnitt rechteckförmige Kastenwandung 19 (Fig. 5) auf. Ferner ist das Anschlussteil 4 mit einer Fixierungsbohrung 18 als Fixierungsmittel 17 versehen. Das Fixierungsmittel 17 dient dazu, das Anschlussteil 4 mit dem daran befestigten Heizregister 23 an dem Befestigungsteil 5 zu befestigen.

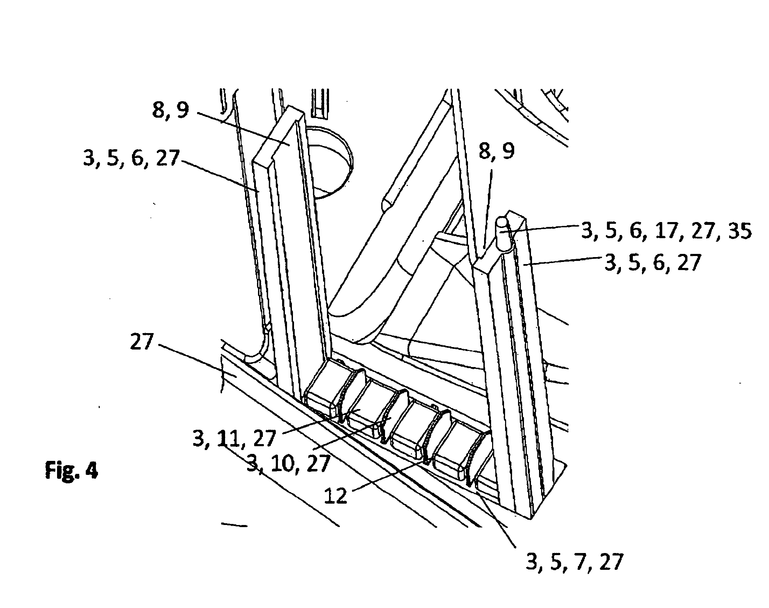

Das U-förmige Befestigungsteil 5 mit zwei Seitenstreben 6 und einer Bodenstrebe 7 (Fig. 4) ist einteilig an dem Klimaanlagengehäüse 27 ausgebildet. Die beiden Seitenstreben 6 sind dabei in einem Abstand zueinander parallel ausgerichtet und am unteren, in Fig. 4 dargestellten Endbereich sind die beiden Seitenstreben 6 durch die Bodenstrebe 7 miteinander verbunden. An den beiden zugewandten Seiten der Seitenstreben 6 ist eine Führungseinrichtung 8 als Führungsschlitz 9 ausgebildet. Ferner sind an der Bodenstrebe 7 einteilig mit dieser mehrere Trennscheiben 10 vorhanden und zwischen den Trennscheiben 10 sind Bodenblöcke 11 vorhanden. Zwischen den Bodenblöcken 11 und den Trennscheiben 10 bilden sich dadurch Schlitze 12. Dabei ist die Dicke der Schlitze 12 ungefähr so groß wie die Dicke von zwei Leiterplatten 22. Die Dicke der Trennscheiben 10 entspricht ungefähr dem Abstand zwischen zwei Leiterplatten 22, zwischen denen die PTC-Elemente angeordnet sind.

Zur Befestigung des Anschlussteils 4 mit dem Heizregister 23 wird das Heizregister 23 in die Führungsschlitze 9 eingeschoben. Die Breite der Führungsschlitze 9 entspricht dabei im Wesentlichen der Breite der Leiterplatten 22, sodass dadurch von den beiden Führungsschlitzen 9 das Heizregister geführt ist beim Schieben des Heizregisters 23 in Richtung zu der Bodenstrebe 7. Am Ende des Einschiebvorgangs des Heizregisters in den Führungsschlitz 9 kommt das untere Ende des Heizregisters 23 in Kontakt zu den Trennscheiben 10. Die Trennscheiben 10 kommen sind dahingehend ausgerichtet, dass die Trennscheiben 10 zwischen zwei Leiterplatten 22 liegen, wobei es sich um diejenigen beiden Leiterplatten 22 handelt, zwischen denen die PTC-Elemente angeordnet sind. Zwischen diesen beiden Leiterplatten 22 ist ein unterschiedliches elektrisches Potential während des Betriebes des Wärmeübertragers 2 vorhanden, sodass mit den Trennscheiben 10 eine dauerhafte Beabstandung der beiden Leiterplatten 22 ausgeführt werden kann und dadurch ein elektrischer Kurzschluss zwischen den beiden Leiterplatten 22 verhindert werden kann. Sollten bei einer Fehlmontage die zwei Leiterplatten 22 versehentlich nicht zwischen den Trennscheiben 10 angeordnet sein, so gelangen die beiden Leiterplatten 22 in den Schlitz 12. Die Dicke des Schlitzes 12 ist dabei dahingehend ausgerichtet, dass die beiden Leiterplatten 22 in mechanischen und dadurch in elektrischen Kontakt gelangen. Nach der Montage des Heizregisters an dem Befestigungsteil 5 wird bei der Herstellung bzw. Montage ein Probebetrieb des Wärmeübertragers 2 durchgeführt. Bei einer eventuellen Fehlmontage kommt es somit sofort zu einem Kurzschluss aufgrund des Kontaktes der beiden Leiterplatten 22 in dem Schlitz 12. Dieser Kurzschluss kann während der Herstellung des Wärmeübertragers 2 bzw. der Kraftfahrzeugklimaanlage 1 sofort erkannt und darauffolgend der Fehler sofort behoben werden. Nach dem vollständigen Einschieben des Heizregisters 23 mit dem Anschlussteil 4 ist noch das Anschlussteil 4 an dem übrigen Klimaanlagengehäuse 27, das heißt hier an dem Befestigungsteil 5 mit den beiden Seitenstreben 6 zu befestigen. Hierzu ist am Ende einer Seitenstrebe 6 ein Fixierungszapfen 35 vorhanden und nach dem vollständigen Einschieben des Heizregisters 23 mit dem Anschlussteil 4 liegt der Fixierungszapfen 35 in der Fixierungsbohrung 18 an dem Anschlussteil 4. Mittels einer Clips- oder Schraubverbindung kann ggf. zusätzlich mittels des Fixierungszapfens 35 und der Fixierungsbohrung 18 dauerhaft das Anschlussteil 4 mit dem Heizregister 3 an dem Klimaanlagengehäuse 27, das heißt an den Seitenstreben 6, befestigt werden (nicht dargestellt).

Insgesamt betrachtet sind mit der erfindungsgemäßen Kraftfahrzeugklimaanlage 1 wesentliche Vorteile verbunden. Ein Teil des mit Spritzgießen hergestellten Klimaanlagengehäuses 27 kann bereits beim Spritzgießen in der Geometrie des Befestigungsteils 5 ausgebildet werden. Dadurch kann ein Teil des Klimaanlagengehäuses 27 als Rahmen 3 für den Wärmeübertrager 2 eingesetzt werden, sodass dadurch bei der Herstellung des Wärmeübertragers 2 als Rahmen 3 lediglich das einfach und preiswert herzustellende Anschlussteil 4 mittels Spritzgießen herzustellen ist.

### Bezugszeichenliste

- 1: Kraftfahrzeugklimaanlage
- 2: Wärmeübertrager
- 3: Rahmen
- 4: Anschlussteil
- 5: Befestigungsteil
- 6: Seitenstrebe
- 7: Bodenstrebe
- 8: Führungseinrichtung
- 9: Führungsschlitz
- 10: Trennscheibe
- 11: Bodenblock
- 12: Schlitz
- 13: Fixierungseinrichtung
- 14: Rastarm
- 15: Rastnase
- 16: Aussparung an der Leiterplatte
- 17: Fixierungsmittel
- 18: Fixierungsbohrung
- 19: Kastenwandung
- 20: Leiter
- 21: Elektrische Kontaktplatte
- 22: Leiterplatte
- 23: Heizregister
- 24: Wärmeleitelement
- 25: Wellrippen
- 26: Gebläse
- 27: Klimaanlagengehäuse
- 28: Bodenwandung
- 29: Gehäusewandung
- 30: Austrittsabschnitt
- 31: Luftfilter
- 32: Kältemittelverdampfer
- 33: Kanal
- 34: Oberfläche
- 35: Fixierungszapfen

## Patentansprüche

1. Kraftfahrzeugklimaanlage (1), umfassend eine Klimaanlagengehäuse (27) und einen Wärmeübertrager (2), der Wärmeübertrager (2), umfassend:
- wenigstens ein elektrisches Widerstandsheizelement, insbesondere wenigstens ein PTC-Element,
- wenigstens zwei mit dem wenigstens einen elektrischen Widerstandsheizelement elektrisch leitend verbundene Leiter (20), als Leiterplatten (22), um elektrischen Strom durch das wenigstens eine elektrische Widerstandsheizelement zu leiten und dadurch das elektrische Widerstandsheizelement zu erwärmen,
- vorzugsweise wenigstens ein elektrisches Isolierelement, welches die wenigstens zwei Leiter (20) elektrisch isoliert, wobei
- das wenigstens eine elektrische Widerstandsheizelement und die wenigstens zwei Leiter (20) zu einem Heizregister (23) verbunden sind,
- einen Rahmen (3) für das Heizregister (23), und
der Rahmen (3) für das Heizregister (23) wenigstens teilweise von dem Klimaanlagengehäuse (27) gebildet ist, wobei der Rahmen (3) ein Anschlussteil (4) und ein Befestigungsteil (5) umfasst, wobei das Befestigungsteil (5) zwei Seitenstreben (6) und eine Bodenstrebe (7) aufweist, **dadurch gekennzeichnet, dass** die beiden Seitenstreben (6) mit einer Führungseinrichtung (8), die als ein Führungsschlitz (9) ausgebildet ist, zur formschlüssigen Befestigung und Führung des Heizregisters (23) versehen sind.

2. Kraftfahrzeugklimaanlage nach Anspruch 1, **dadurch gekennzeichnet, dass** das Befestigungsteil (5) von dem Klimaanlagengehäuse (27) gebildet ist.

3. Kraftfahrzeugklimaanlage nach Anspruch 2, **dadurch gekennzeichnet, dass** das Befestigungsteil (5) einteilig an dem Klimaanlagengehäuse (27) ausgebildet ist.

4. Kraftfahrzeugklimaanlage nach einem oder mehreren der Ansprüche 2 bis 3, **dadurch gekennzeichnet, dass** das Befestigungsteil (5) im Wesentlichen U-förmig ist.

5. Kraftfahrzeugklimaanlage nach Anspruch 1, **dadurch gekennzeichnet, dass** an der Bodenstrebe (7) wenigstens eine Trennscheibe (10) ausgebildet ist, welche zwischen zwei Leitern (20) angeordnet ist zur Verhinderung eines mechanischen und elektrischen Kontaktes zwischen den beiden Leitern (20).

6. Kraftfahrzeugklimaanlage nach einem oder mehreren der Ansprüche 1 bis 5, **dadurch gekennzeichnet, dass** das Anschlussteil (4) ein gesondertes, von dem Kraftfahrzeugklimaanlagengehäuse (27) unabhängiges Bauteil ist.

7. Kraftfahrzeugklimaanlage nach einem oder mehreren der Ansprüchen 1 bis 6, **dadurch gekennzeichnet, dass** das Anschlussteil (27) eine Fixierungseinrichtung (13) zur Fixierung des Heizregisters (23) an dem Anschlussteil (4) aufweist.

8. Kraftfahrzeugklimaanlage nach Anspruch 7, **dadurch gekennzeichnet, dass** mit der Fixierungseinrichtung (13) das Heizregister (23) form- und/oder kraftschlüssig an dem Anschlussteil (4) fixiert ist.

9. Kraftfahrzeugklimaanlage nach Anspruch 7 oder 8, **dadurch gekennzeichnet, dass** das Anschlussteil (4) als Fixierungseinrichtung (13) zwei Rastarme (14) mit je einer Rastnase (15) aufweist und jeweils eine Rastnase (15) in einer Aussparung (16) an je einem Leiter (20) eingreift.

10. Kraftfahrzeugklimaanlage nach einem oder mehreren der vorhergehenden Ansprüchen, **dadurch gekennzeichnet, dass** das Anschlussteil (4) eine, vorzugsweise im Querschnitt rechteckförmige, Öffnung aufweist und innerhalb der Öffnung das Heizregister (23) angeordnet ist.

11. Kraftfahrzeugklimaanlage nach Anspruch 10, **dadurch gekennzeichnet, dass** das Heizregister (23) mit Kontaktplatten (21) zum Leiten von elektrischen Strom durch die wenigstens zwei Leiter (20) und das wenigstens eine elektrische Widerstandsheizelement versehen ist und die Kontaktplatten (21) an oder im Bereich der Öffnung angeordnet sind.

12. Kraftfahrzeugklimaanlage nach einem oder mehreren der vorhergehenden Ansprüchen, **dadurch gekennzeichnet, dass** mit wenigstens einem Fixierungsmittel (17), z. B. einer Schraub- oder eine Clipsverbindung, das Anschlussteil (4) an dem Kraftfahrzeugklimaanlagengehäuse (27) fixiert ist,

13. Kraftfahrzeugklimaanlage nach einem oder mehreren der vorhergehenden Ansprüche, **dadurch gekennzeichnet, dass** die Kraftfahrzeugklimaanlage (27) ein Gebläse (26) und/oder einen Kältemittelverdampfer (32) und/oder wenigstens eine Luftleiteinrichtung, z. B. eine Luftklappe, und/oder einen Luftfilter (31) umfasst.

## Claims

1. A motor vehicle air conditioning system (1), comprising an air conditioning system housing (27) and a heat exchanger (2), the heat exchanger (2) comprising:
- at least one electrical resistance heating element, in particular at least one PTC element,
- at least two conductors (20), which are electrically conductively connected to the at least one electrical resistance heating element, as a printed circuit boards (22) so as to conduct electrical current through the at least one electrical resistance heating element and thereby heat the electrical resistance heating element,
- preferably at least one electrical insulating element, which electrically insulates the at least two conductors (20), wherein
- the at least one electrical resistance heating element and the at least two conductors (20) are connected to form a heater coil (23),
- a frame (3) for the heater coil (23), and
- the frame (3) for the heater coil (23) is formed at least partially by the air conditioning system housing (27), the frame (3) comprising a connecting part (4) and an attachment part (5), the attachment part (5) comprising two side struts (6) and a bottom strut (7), **characterized in that** the two side struts (6) are provided with a guide device (8), which is designed as a guide slot (9), for attaching and guiding the heater coil (23) in a form-locked manner.

2. The motor vehicle air conditioning system according to claim 1, **characterized in that** the attachment part (5) is formed by the air conditioning system housing (27) .

3. The motor vehicle air conditioning system according to claim 2, **characterized in that** the attachment part (5) is formed in one piece on the air conditioning system housing (27).

4. A motor vehicle air conditioning system according to one or more of claims 2 to 3, **characterized in that** the attachment part (5) is substantially U-shaped.

5. The motor vehicle air conditioning system according to claim 1, **characterized in that** at least one partition (10) is formed on the bottom strut (7), the partition being disposed between two conductors (20) so as to prevent mechanical and electrical contact between the two conductors (20).

6. A motor vehicle air conditioning system according to one or more of claims 1 to 5, **characterized in that** the connecting part (4) is a separate component, which is independent from the motor vehicle air conditioning system housing (27).

7. A motor vehicle air conditioning system according to one or more of claims 1 to 6, **characterized in that** the connecting part (27) comprises a fixing device (13) for fixing the heater coil (23) to the connecting part (4).

8. The motor vehicle air conditioning system according to claim 7, **characterized in that** the heater coil (23) is fixed in a form-locked manner and/or non-positively to the connecting part (4) by way of the fixing device (13).

9. The motor vehicle air conditioning system according to claim 7 or 8, **characterized in that** the connecting part (4), serving as the fixing device (13), comprises two detent arms (14), each having one detent lug (15), and that a detent lug (15) in each case engages in a recess (16) on a respective conductor (20).

10. A motor vehicle air conditioning system according to one or more of the preceding claims, **characterized in that** the connecting part (4) has an opening, which preferably has a rectangular cross-section, and the heater coil (23) is disposed inside the opening.

11. The motor vehicle air conditioning system according to claim 10, **characterized in that** the heater coil (23) is provided with contact plates (21) for conducting electrical current through the at least two conductors (20) and the at least one electrical resistance heating element, and the contact plates (21) are disposed on or in the region of the opening.

12. A motor vehicle air conditioning system according to one or more of the preceding claims, **characterized in that** the connecting part (4) is fixed on the motor vehicle air conditioning system housing (27) by way of at least one fixing means (17), such as a screw connection or a clip connection.

13. A motor vehicle air conditioning system according to one or more of the preceding claims, **characterized in that** the motor vehicle air conditioning system (27) comprises a fan (26) and/or a refrigerant evaporator (32) and/or at least one air-deflecting device, such as an air damper, and/or an air filter (31).

## Revendications

1. Système de climatisation (1) d'un véhicule automobile, comprenant un carter de système de climatisation (27) et un échangeur de chaleur (2), l'échangeur de chaleur (2) comprenant:
- au moins un élément chauffant électrique à résistance, en particulier au moins un élément à coefficient de température positif (CTP),
- au moins deux conducteurs (20) considérés comme des plaques conductrices (22) et raccordés de façon électroconductrice à l'élément chauffant électrique à résistance au moins au nombre de un, pour faire passer le courant électrique à travers l'élément chauffant électrique à résistance au moins au nombre de un et, de ce fait, pour chauffer l'élément chauffant électrique à résistance,
- de préférence au moins un élément insolant électrique qui isole électriquement les conducteurs (20) au moins au nombre de deux, où
- l'élément chauffant électrique à résistance au moins au nombre de un et les conducteurs (20) au moins au nombre de deux sont assemblés pour former un registre de chauffage (23),
- un cadre (3) pour le registre de chauffage (23), et le cadre (3) prévu pour le registre de chauffage (23) est formé au moins partiellement par le carter (27) du système de climatisation, où le cadre (3) comprend une pièce de raccordement (4) et une pièce de fixation (5), où la pièce de fixation (5) présente deux renforts latéraux (6) et un renfort de fond (7), **caractérisé en ce que** les deux renforts latéraux (6) sont dotés d'un dispositif de guidage (8) qui est configuré comme une fente de guidage (9), dispositif de guidage qui sert à la fixation, par complémentarité de forme, et au guidage du registre de chauffage (23).

2. Système de climatisation d'un véhicule automobile selon la revendication 1, **caractérisé en ce que** la pièce de fixation (5) est formée par le carter (27) du système de climatisation.

3. Système de climatisation d'un véhicule automobile selon la revendication 2, **caractérisé en ce que** la pièce de fixation (5) est configurée en formant une seule et même pièce sur le carter (27) du système de climatisation.

4. Système de climatisation d'un véhicule automobile selon l'une ou l'autre des revendications 2 et 3 ou selon les deux revendications, **caractérisé en ce que** la pièce de fixation (5) est pratiquement en forme de U.

5. Système de climatisation d'un véhicule automobile selon la revendication 1, **caractérisé en ce qu'**au moins un disque de séparation (10) est configuré sur le renfort de fond (7), disque de séparation qui est disposé entre deux conducteurs (20), pour empêcher un contact mécanique et électrique entre les deux conducteurs (20).

6. Système de climatisation d'un véhicule automobile selon l'une quelconque ou plusieurs des revendications 1 à 5, **caractérisé en ce que** la pièce de raccordement (4) est un composant distinct, indépendant du carter (27) du système de climatisation du véhicule automobile.

7. Système de climatisation d'un véhicule automobile selon l'une quelconque ou plusieurs des revendications 1 à 6, **caractérisé en ce que** la pièce de raccordement (27) présente un dispositif de fixation (13) servant à la fixation du registre de chauffage (23) sur la pièce de raccordement (4).

8. Système de climatisation d'un véhicule automobile selon la revendication 7, **caractérisé en ce que** le registre de chauffage (23) est fixé sur la pièce de raccordement (4), par complémentarité de forme et/ou par action de force, avec le dispositif de fixation (13).

9. Système de climatisation d'un véhicule automobile selon la revendication 7 ou 8, **caractérisé en ce que** la pièce de raccordement (4) présente, en tant que dispositif de fixation (13), deux pattes d'encliquetage (14) comprenant chacune un ergot d'encliquetage (15), et un ergot d'encliquetage (15) s'engage à chaque fois dans une encoche (16) située sur chaque conducteur (20).

10. Système de climatisation d'un véhicule automobile selon l'une quelconque ou plusieurs des revendications précédentes, **caractérisé en ce que** la pièce de raccordement (4) présente une ouverture ayant de préférence une section de forme rectangulaire, et le registre de chauffage (23) est disposé à l'intérieur de l'ouverture.

11. Système de climatisation d'un véhicule automobile selon la revendication 10, **caractérisé en ce que** le registre de chauffage (23) est doté de plaques de contact (21) servant à faire passer le courant électrique à travers les conducteurs (20) au moins au nombre de deux et à travers l'élément chauffant électrique à résistance au moins au nombre de un, et les plaques de contact (21) sont disposées sur ou dans la zone de l'ouverture.

12. Système de climatisation d'un véhicule automobile selon l'une quelconque ou plusieurs des revendications précédentes, **caractérisé en ce que** la pièce de raccordement (4) est fixée sur le carter (27) du système de climatisation du véhicule automobile, en utilisant au moins un moyen de fixation (17), par exemple une vis d'assemblage ou un clips d'assemblage.

13. Système de climatisation d'un véhicule automobile selon l'une quelconque ou plusieurs des revendications précédentes, **caractérisé en ce que** le système de climatisation (27) du véhicule automobile comprend un ventilateur (26) et/ou un évaporateur de fluide frigorigène (32) et/ou au moins un dispositif déflecteur d'air, par exemple un volet d'air, et/ou un filtre à air (31).
